# FASCICULE DE BREVET EUROPEEN

(11) **EP 1 800 579 B1**
(45) Date de publication et mention de la délivrance du brevet: **31.12.2008**
(21) Numéro de dépôt: 06356148.4
(22) Date de dépôt: 19.12.2006
(51) Int. Cl.: A47J 37/12

(54) **Appareil de cuisson comprenant un sous-ensemble d'alimentation et de commande simplifié**
Gargerät mit einer Versorgungs- und Steuerungseinheit
Cooking appliance with a supply and control subassembly

(30) Priorité: 22.12.2005 FR 0513133
(43) Date de publication de la demande: 27.06.2007
(73) Titulaire: SEB SA, 69130 Ecully (FR)
(72) Inventeur: Federico, Dominique, 21121 Ahuy (FR)
(74) Mandataire: Kiehl, Hubert

(56) Documents cités:
- EP-A- 0 587 300
- DE-U1- 20 302 885
- GB-A- 2 321 178
- US-A1- 2003 047 554
- US-B1- 6 341 555
- US-B1- 6 742 444

## Description

La présente invention concerne le domaine technique des appareils de cuisson comprenant un élément de cuisson comportant des moyens de chauffe. La présente invention concerne notamment, mais non exclusivement, les friteuses électriques.

Usuellement, dans les appareils du type précité, les organes de contrôle, les organes de commande, les organes de régulation, les organes de sécurité, et les organes d'alimentation électrique sont montés séparément à l'intérieur du boîtier de l'appareil de cuisson. De telles constructions nécessitent des opérations de montage compliquées.

Il est connu du document EP 0 587 300 une friteuse électrique comprenant un boitier, un élément de cuisson comportant des moyens de chauffe munis de connecteurs électriques, un support constitué d'une plaque intermédiaire fixée au boîtier, des moyens de connexion électrique prévus pour coopérer avec les connecteurs électriques, ainsi que des moyens de régulation thermostatique comportant un thermostat. Le support définit avec le boîtier un espace de réception logeant le thermostat. Les moyens de connexion électriques sont montés sur le support. Le boîtier est constitué de plusieurs pièces pouvant être assemblées ultérieurement au montage du thermostat sur une plaque de fond du boîtier et au montage du connecteur électrique sur la plaque intermédiaire. Le montage d'un tel appareil nécessite de nombreuses opérations du fait du nombre de composants élevé.

Le document US 2003/047554 divulgue les caractéristiques du préambule de la revendication 1.

Le but de la présente invention est de remédier à ces inconvénients et de proposer un appareil électrique de cuisson comprenant un boîtier recevant un élément de cuisson comportant des moyens de chauffe, dont la réalisation et le montage sont simplifiés et limités.

Un autre but de l'invention est de réaliser de manière économique un appareil électrique de cuisson comprenant un boîtier recevant un élément de cuisson comportant des moyens de chauffe.

Ces buts sont atteints avec un appareil électrique de cuisson, notamment une friteuse électrique selon les caractéristiques de la revendication 1.

En d'autres termes, le support peut être mis en place dans le logement ouvert du boîtier, par le passage du logement ouvert servant aussi à la mise en place de l'élément de cuisson.

Le support, sur lequel sont montés les moyens de connexion électrique ainsi que les moyens de régulation et/ou les moyens de sécurité thermique, constitue alors un sous-ensemble électrique.

Le support définissant avec le boîtier un espace de réception des parties électriques actives, le support n'a pas besoin en lui-même d'être fermé. Ainsi, le sous-ensemble électrique peut être dépouillé et moins onéreux qu'un sous ensemble électrique prévu pour être démonté de l'appareil par l'utilisateur. La construction du sous-ensemble électrique est simplifiée.

Lors du montage de l'appareil électrique de cuisson, le sous-ensemble électrique déjà pré-assemblé peut être simplement fixé au boîtier. Ainsi les opérations d'assemblage sont simplifiées et limitées.

Une telle construction permet donc d'optimiser les opérations d'assemblage et de limiter le nombre de pièces nécessaires pour le montage de l'appareil. Le coût de fabrication du produit peut ainsi être réduit.

De plus, du fait de la concentration des composants en une zone réduite, l'encombrement des composants dans l'appareil est limité. L'appareil électrique de cuisson peut ainsi être plus compact.

Pour permettre l'accès aux composants, le démontage d'un simple jeu de fixations, par exemple des vis, permet de désolidariser le sous-ensemble électrique de la base du boîtier. De ce fait, la présence d'une trappe de fond dans le boîtier de l'appareil peut être évitée.

Selon une autre caractéristique de l'appareil électrique de cuisson, le support présente une face intérieure concave.

Cette configuration permet de protéger les éléments montés sur le support avant l'assemblage du support dans le boîtier. La concavité de la face intérieure du support permet de définir l'espace de réception avec le boîtier de façon simple. De plus, une telle géométrie permet de monter le support sur une face plane du boîtier.

De préférence, le support est fixé sur une face supérieure du boîtier.

Cette disposition permet de faciliter la liaison avec les connecteurs électriques lorsque ceux-ci sont disposés sous l'élément de cuisson. De plus, cette disposition permet de simplifier la fixation du support sur le boîtier.

Avantageusement, le support est réalisé en matière plastique résistant à une température supérieure à 100°C.

Cette réalisation permet au support de résister à la chaleur dégagée par les moyens de chauffe. Cette réalisation permet aussi de protéger thermiquement les composants placés au niveau de l'espace de réception formé par le support et le boîtier.

Selon un mode de réalisation avantageux, le boîtier présente une conformation prévue pour coopérer avec le support.

La conformation permet de guider la mise en place du support lors du montage de l'appareil électrique de cuisson.

Avantageusement, le boîtier comporte une coque formée d'une seule pièce.

En d'autres termes, le boîtier comporte une pièce présentant un socle relié à une paroi latérale annulaire. Cette réalisation permet de limiter les opérations de montage.

De préférence, les moyens de régulation thermostatique et/ou les moyens de sécurité thermique comportent au moins un palpeur prévu pour coopérer avec l'élément de cuisson.

Les fonctions de régulation thermostatique et de sécurité thermique nécessitent des moyens de détection de température. Afin d'optimiser la construction de l'appareil, les moyens de détection de température sont constitués d'un ou de plusieurs palpeurs montés sur le support.

Avantageusement alors, le palpeur coopère avec une face inférieure de l'élément de cuisson.

Afin d'optimiser la détection de température, le ou les palpeurs sont en contact avec l'élément de cuisson.

Avantageusement, des moyens de commande thermostatique coopérant avec les moyens de régulation thermostatique sont reliés à l'organe de commande.

Ainsi, l'actionnement de l'organe de commande permet de définir la consigne de température au niveau des moyens de régulation thermostatique.

Selon une forme de réalisation avantageuse, les moyens de commande thermostatique actionnent un rupteur ouvrant et fermant un circuit d'alimentation électrique.

Ainsi, outre l'actionnement des moyens de régulation thermostatique, les moyens de commande thermostatique ont pour fonction de commander la mise sous tension de l'appareil. Cette construction limite le nombre de pièces nécessaires et facilite la construction de l'appareil.

Avantageusement, le support porte une prise de connexion extérieure.

L'appareil de cuisson électrique dispose donc d'un organe d'alimentation électrique qui fait avantageusement partie du sous-ensemble électrique de manière à contribuer à la concentration des éléments au niveau du sous-ensemble électrique et ainsi à faciliter le montage de l'appareil. La prise de connexion extérieure peut en effet recevoir un câble d'alimentation extérieure adapté au pays de commercialisation de l'appareil, ce câble d'alimentation extérieure pouvant être un composant standard. Dès lors, le support formant un sous-ensemble électrique peut être un composant commun à plusieurs versions de l'appareil. La différenciation des appareils selon les pays peut être limitée au boîtier portant des marquages et au câble d'alimentation extérieure. La construction de l'appareil est ainsi particulièrement économique.

De préférence, un organe de commande et/ou un organe d'avertissement solidaires du support sont disposés du côté d'une face frontale du boîtier, et la prise de connexion extérieure est orientée à l'opposé de la face frontale.

Cette disposition permet de faciliter l'accès à l'organe de commande et/ou à l'organe d'avertissement pour l'utilisateur.

De préférence, le boîtier comporte une ouverture prévue pour l'accès à la prise de connexion extérieure.

Ainsi le câble d'alimentation électrique est monté à l'extérieur du boîtier. En alternative, le boîtier pourrait notamment comporter une échancrure dans laquelle est engagé le support.

Plus particulièrement, la prise de connexion extérieure est agencée derrière l'ouverture.

En d'autres termes, la prise de connexion extérieure est agencée du côté du boîtier recevant le support formant avec le boîtier un logement pour les parties électriques actives de l'appareil.

Selon une forme de réalisation avantageuse, le boîtier comporte une cavité dans laquelle est ménagée l'ouverture.

La cavité permet l'accessibilité à la connexion du câble d'alimentation extérieure. De plus, la cavité reçoit une partie du câble d'alimentation extérieure et une partie de la prise de connexion extérieure et permet ainsi de limiter l'espace nécessaire entre le socle de l'appareil et le plan de travail.

La cavité peut également servir d'espace de rangement du câble d'alimentation extérieure.

Avantageusement, l'élément de cuisson est une cuve de cuisson.

Ainsi, l'appareil électrique de cuisson peut notamment être un appareil à bain de cuisson destiné à recevoir des aliments, l'élément de cuisson contenant alors par exemple de l'huile ou de l'eau. L'appareil peut par exemple être aussi un grill dont l'élément de cuisson présente des rebords permettant de limiter les éclaboussures.

Avantageusement, l'élément de cuisson repose sur le boîtier.

Outre la fonction de réception du support, le boîtier a pour fonction de recevoir et de supporter l'élément de cuisson.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un exemple de réalisation d'un appareil électrique de cuisson selon l'invention, dans lequel l'élément de cuisson n'est pas représenté ;
- la figure 2 est une vue en perspective du boîtier de l'appareil électrique de cuisson montré à la figure 1, dans lequel le sous-ensemble électrique a été retiré ;
- la figure 3 est une autre vue en perspective de l'appareil électrique de cuisson présenté aux figures 1 et 2 ;
- la figure 4 est une vue en perspective de l'élément de cuisson de l'appareil électrique de cuisson représenté aux figures 1 à 3 ;
- la figure 5 est une coupe verticale de l'appareil électrique de cuisson représenté aux figures 1 à 4 ;
- la figure 6 est une vue en perspective du sous-ensemble électrique de l'appareil électrique de cuisson représenté aux figures 1 à 5 ;
- la figure 7 est une autre vue en perspective du sous-ensemble électrique représenté à la figure 6.

Seuls les éléments nécessaires à la compréhension de l'invention ont été représentés. Pour faciliter la lecture des dessins, les mêmes éléments portent les mêmes références d'une figure à l'autre.

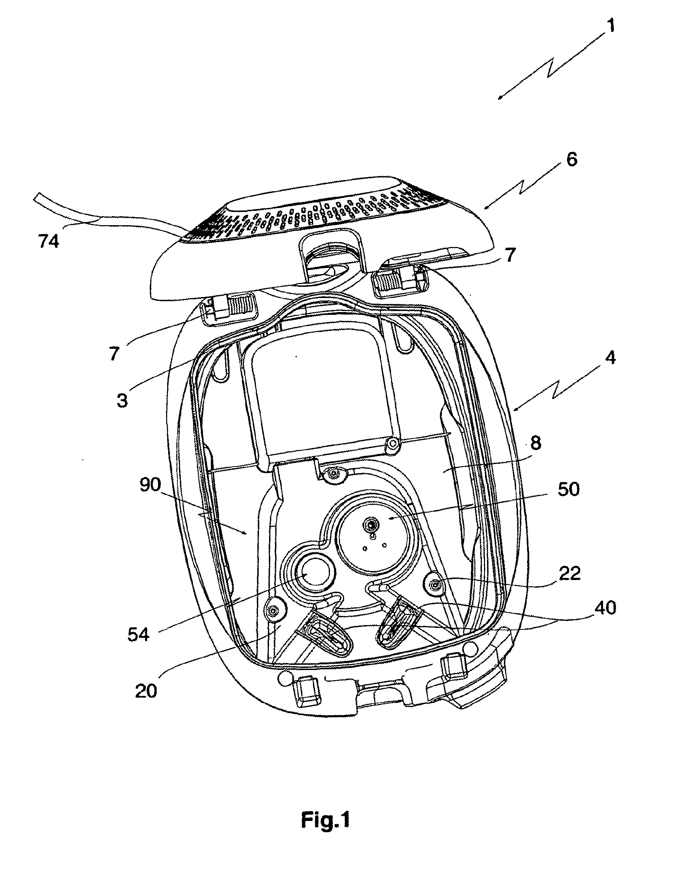

Un exemple de réalisation est présenté sur les figures 1 à 6 se rapportant à un appareil électrique de cuisson 1, notamment une friteuse électrique, comprenant un boîtier 4, un élément de cuisson 30 comportant des moyens de chauffe 32 munis de connecteurs électriques 34, et un couvercle 6 monté sur le boîtier 4. Le couvercle 6 est lié au boîtier par des charnières 7.

L'appareil électrique de cuisson 1 comprend des moyens de connexion électrique 40 prévus pour coopérer avec les connecteurs électriques 34.

Tel que représenté aux figures 1, 2, 3 et 5, le boîtier 4 comporte une coque 5 comprenant un socle 10 entouré d'une paroi latérale 12. Le socle 10 est destiné à être en contact avec le plan de travail directement, ou par l'intermédiaire de pieds ou de patins 11. Le boîtier 4 comporte une bague 3 montée sur la coque 5. La coque 5 est de préférence formée d'une seule pièce.

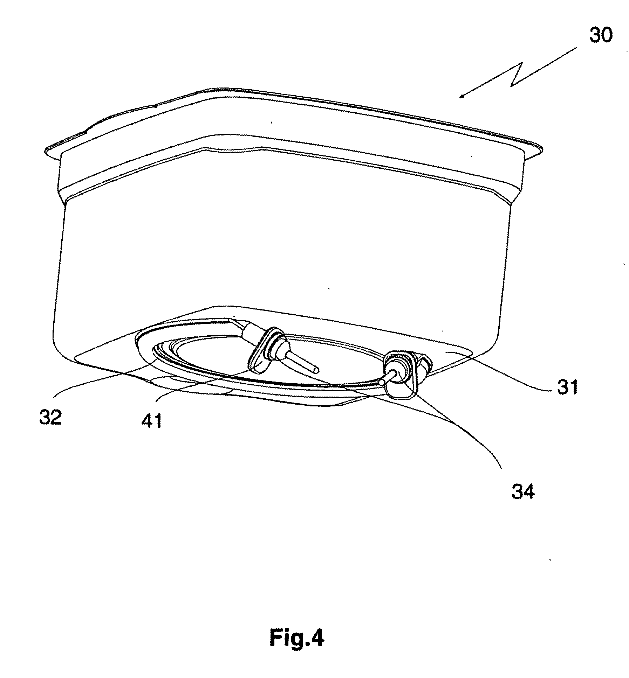

L'élément de cuisson 30, représenté à la figure 4, est une cuve de cuisson. Les moyens de chauffe 32 sont disposés au niveau d'une face inférieure 31 de l'élément de cuisson 30. Les moyens de chauffe 32 sont constitués d'une résistance circulaire blindée, soudée à l'élément de cuisson 30, décrivant une couronne non complète présentant des connecteurs électriques 34 à chacune de ses extrémités. Les connecteurs électriques 34 sont montés sur des éléments de protection 41.

L'élément de cuisson 30 repose sur le boîtier 4. Plus particulièrement, l'élément de cuisson 30 repose sur la bague 3.

L'élément de cuisson 30 est monté de façon amovible par rapport au boîtier 4. A titre de variante, l'élément de cuisson 30 pourrait être fixé au boîtier 4.

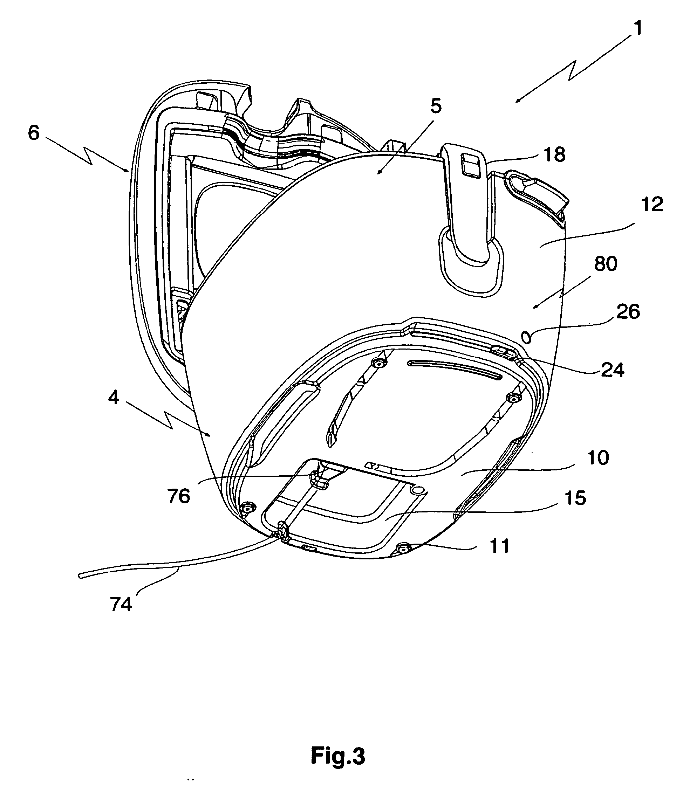

L'élément de cuisson 30 peut accessoirement recevoir un panier (non visible sur les figures), associé avantageusement à une poignée 18 destinée à monter et baisser ledit panier, visible sur la figure 3.

Tel que représenté à la figure 1, l'appareil électrique de cuisson 1 comporte un support 20 fixé au boîtier 4. Le support 20 est fixé sur une paroi interne 9 du boîtier 4. Plus particulièrement, le support 20 est fixé sur une face supérieure 8 du boîtier 4. La face supérieure 8 appartient au socle 10 du boîtier 4.

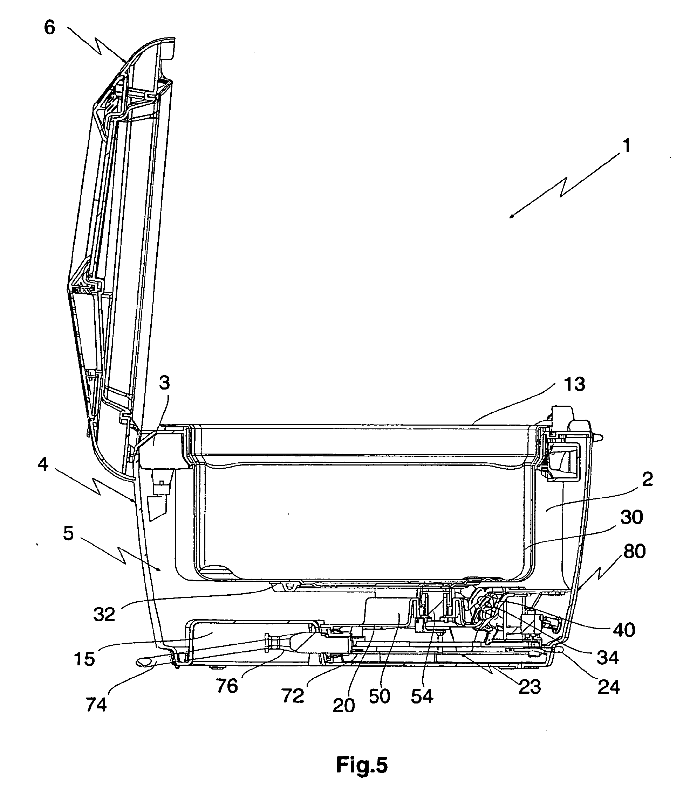

Tel que représenté à la figure 5, le boîtier 4 forme un logement ouvert 2 ménageant un passage 13 permettant la mise en place du support 20 puis de l'élément de cuisson 30.

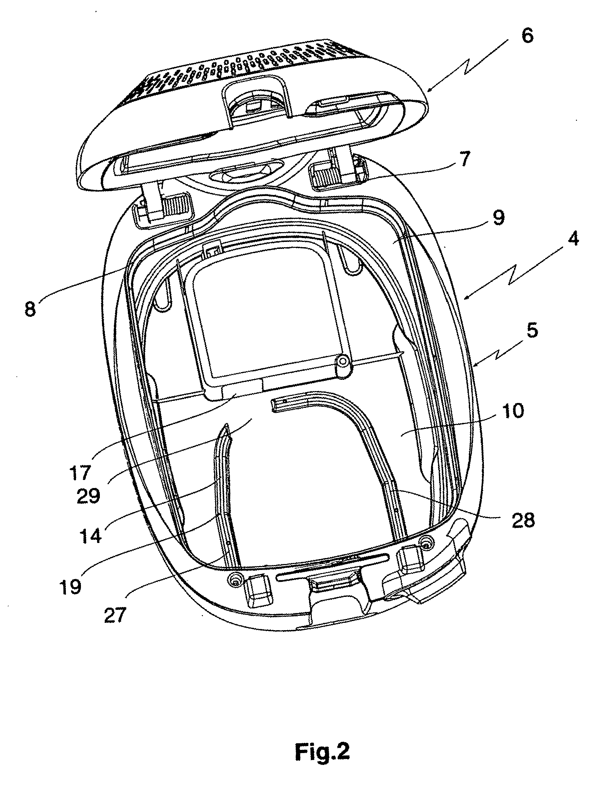

Tel que représenté à la figure 2, le boîtier 4 présente des moyens de positionnement 19 prévus pour coopérer avec le support 20. Les moyens de positionnement 19 sont ménagés sur la face supérieure 8 du boîtier 4. Les moyens de positionnement 19 sont formés par deux nervures 27, 28 séparées par un dégagement 29. Le support 20 est fixé au boîtier 4 par des vis de fixation 22.

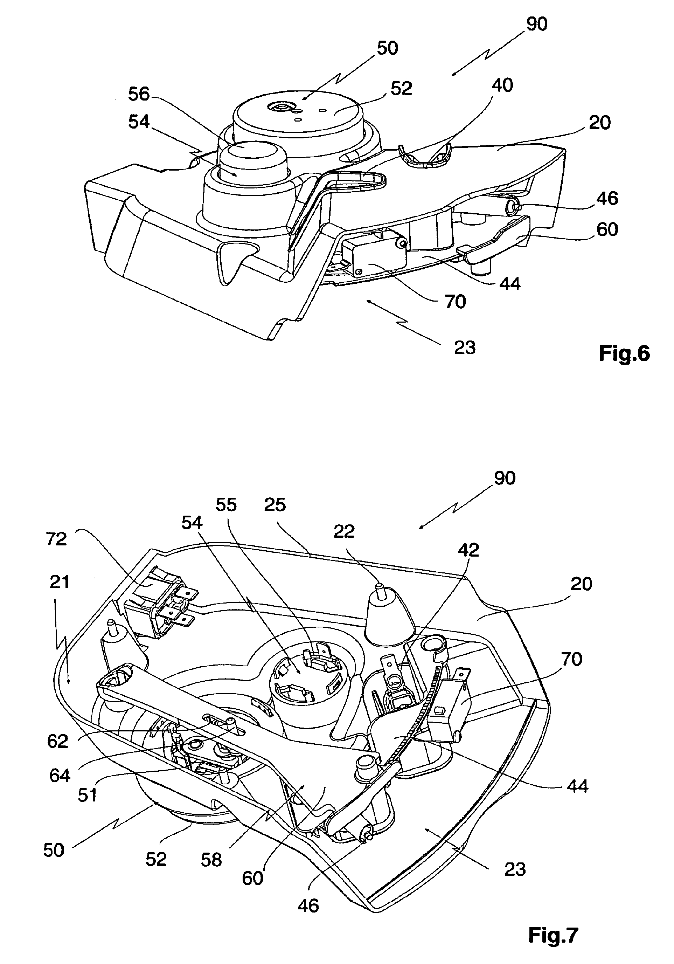

Les figures 6 et 7 représentent le support 20 muni de composants électriques et thermiques décrits ci-après formant un sous-ensemble électrique 90. La figure 6 est orientée de manière à rendre visible la face du support 20 destinée à être en regard du passage 13 du boîtier 4 ; la figure 7 est orientée de manière à rendre visible la face du support 20 destinée à être en regard du socle 10 du boîtier 4. Les câblages entre les éléments électriques ne sont pas représentés aux figures 6 et 7.

Le support 20 présente une face intérieure 21 concave. La face intérieure 21 correspond à la face du support 20 destinée à être en regard du socle 10 du boîtier 4. La face intérieure 21 est limitée par un bord périphérique 25.

Le support 20 est réalisé en matière plastique résistant à une température supérieure à 100°C. Plus particulièrement, le support 20 est réalisé en PBT.

Les moyens de connexion électrique 40 sont montés sur le support 20. Plus particulièrement, les moyens de connexion électrique 40 sont montés sur des éléments de protection 42.

L'appareil électrique de cuisson 1 comprend des moyens de régulation thermostatique 50 et des moyens de sécurité thermique 54 montés sur le support 20.

Le support 20 définit avec le boîtier 4 un espace de réception 23 logeant les parties électriques actives des moyens de régulation thermostatique 50 et des moyens de sécurité thermique 54.

Les moyens de régulation thermostatique 50 comportent un palpeur 52 et les moyens de sécurité thermique 54 comportent un palpeur 56. Les moyens de régulation thermostatique 50 comportent un thermostat 51. Le palpeur 52 est constitué d'une coupelle supportant le thermostat 51. Les moyens de sécurité thermique 54 comportent un fusible 55. Le palpeur 56 est constitué d'une coupelle supportant le fusible 55.

Les palpeurs 52 et 56 coopèrent avec la face inférieure 31 de l'élément de cuisson 30. Les palpeurs 52 et 56 sont montés sur le support 20 par l'intermédiaire de ressorts de compression de manière à assurer un contact thermique optimal avec la face inférieure 31 de l'élément de cuisson 30 ; leur montage sur ressort de compression permet de remédier aux dispersions dimensionnelles de fabrication.

Des moyens de commande thermostatique 58 sont montés sur le support 20. Les moyens de commande thermostatique 58 ont pour fonction de régler le thermostat 51.

Les moyens de commande thermostatique 58 coopérant avec les moyens de régulation thermostatique 50 sont reliés à un organe de commande 24, représenté aux figures 3 et 5. L'organe de commande 24 est solidaire du support 20. L'organe de commande 24 est disposé du côté d'une face frontale 80 du boîtier 4. L'organe de commande 24 est formé par un curseur mobile latéralement. A titre de variante, il est possible d'envisager notamment un organe de commande formé par un bouton de commande rotatif ou par un curseur mobile verticalement.

Les moyens de commande thermostatique 58 comprennent un bras de commande 60. Le bras de commande 60 est articulé sur le support 20 et est maintenu par une platine 44 ayant une forme de portion de disque dont le bord périphérique est cranté. La platine 44 est montée sur la face intérieure 21 du support 20. La platine 44 coiffe les moyens de connexion électrique 40. Les moyens de commande thermostatique 58 comportent une biellette 64 montée sur le thermostat 51. La biellette 64 traverse le bras de commande 60 de part en part au niveau d'une lumière 62 du bras de commande 60.

L'organe de commande 24 est lié à l'extrémité du bras de commande 60 et est assemblé après la fixation du support 20 dans le boîtier 4.

Lors de l'actionnement de l'organe de commande 24, le bras de commande 60 déplace la biellette 64 montée sur le thermostat 51 de manière à établir le réglage du thermostat 51. Le réglage du thermostat 51 détermine la consigne de température.

Les moyens de commande thermostatique 58 actionnent un rupteur 70 ouvrant et fermant un circuit d'alimentation électrique. Le rupteur 70 est monté sur le support 20 contre la platine 44, de manière à être actionné par le mouvement du bras de commande 60 résultant du déplacement de l'organe de commande 24.

Un organe d'avertissement 46 est solidaire du support 20. L'organe d'avertissement 46 est disposé du côté de la face frontale 80 du boîtier 4. L'organe d'avertissement 46 indique que la température du contenu de l'élément de cuisson 30 a atteint une valeur prédéterminée. L'organe d'avertissement 46 est agencé en regard d'une fenêtre 26, représenté sur la figure 3, située au niveau de la paroi latérale 12 du boîtier 4. L'organe d'avertissement 46 est, par exemple, formé par un voyant lumineux.

Un câble d'alimentation extérieure 74, représenté sur les figures 1, 2 et 5, est relié au support 20. Le support 20 porte une prise de connexion extérieure 72, représentée sur la figure 7. La prise de connexion extérieure 72 est prévue pour recevoir une fiche 76 du câble d'alimentation extérieure 74.

Le boîtier 4 comporte une ouverture 17, représentée à la figure 2, prévue pour l'accès à la prise de connexion extérieure 72. La prise de connexion extérieure 72 est orientée à l'opposé de la face frontale 80 du boîtier 4.

Plus particulièrement, tel que visible sur la figure 5, la prise de connexion extérieure 72 est agencée derrière l'ouverture 17.

Le boîtier 4 comporte une cavité 15 dans laquelle est ménagée l'ouverture 17. La cavité 15, représentée sur la figure 3, est formée au niveau du socle 10 et est destinée à être en regard du plan de travail sur lequel sera posé l'appareil électrique de cuisson 1. La cavité 15 peut faire office d'espace de rangement du câble d'alimentation extérieure 74.

La cavité 15 occupe entre le tiers et la moitié de la longueur du boîtier 4 à partir de la face frontale 80, tel que visible sur la figure 5.

Le sous ensemble électrique 90 occupe entre la moitié et les deux tiers de la longueur du boîtier 4 à partir de la face frontale 80, tel que visible sur la figure 5.

L'appareil selon l'invention se monte et s'utilise de la manière suivante.

Le sous-ensemble électrique 90 constitué par le support 20 et les moyens de connexion électrique 40, les moyens de régulation thermostatique 50, les moyens de sécurité thermique 54 et la prise de connexion extérieure 72 peut être assemblé préalablement à la fixation du support 20 sur le boîtier 4.

Le sous-ensemble électrique 90 regroupant les différents organes électriques de l'appareil est indépendant du boîtier 4.

De ce fait, les opérations d'assemblage du sous-ensemble électrique 90 dans le boîtier 4 sont simplifiées et limitées. Le sous-ensemble électrique 90 est disposé dans le boîtier 4 de manière à ce que le bord périphérique 25 du support 20 se loge autour des nervures 27 et 28 et à ce que la prise de connexion extérieure 72 se loge dans le dégagement 29. La prise de connexion extérieure 72 est alors en regard de l'ouverture 17 du boîtier 4. Puis, l'opérateur assemble l'organe de commande 24 au bras de commande 60 à partir de l'extérieur du boîtier 4. Le sous-ensemble électrique 90 est fixé à demeure au boîtier 4 au moyen des vis de fixation 22 reliant le support 20 au boîtier 4. Les parties électriques actives sont ainsi protégées par le support 20 et le boîtier 4.

Lorsque l'utilisateur place l'élément de cuisson 30 dans le boîtier 4 de l'appareil électrique de cuisson 1 relié à un circuit d'alimentation électrique, l'élément de cuisson 30 vient en contact du palpeur 52 des moyens de régulation thermostatique 50 et du palpeur 56 des moyens de sécurité thermique 54. De plus, les connecteurs électriques 34 des moyens de chauffe 32 viennent en contact des moyens de connexion électrique 40 montés sur le support 20.

L'utilisateur peut alors régler la consigne de température par l'actionnement de l'organe de commande 24. L'actionnement de l'organe de commande 24 a pour conséquence de déplacer le bras de commande 60 qui, d'une part actionne la biellette 64 réglant le thermostat 51, et d'autre part, libère le rupteur 70. La libération du rupteur 70 a pour conséquence d'ouvrir le circuit d'alimentation et d'illuminer l'organe d'avertissement 46.

Dès lors, les moyens de chauffe 32 sont alimentés et chauffent la face inférieure 31 de l'élément de cuisson 30 jusqu'à ce que la température de l'élément de cuisson 30 atteigne la température de consigne. A ce moment là, l'organe d'avertissement 46 s'éteint de manière à indiquer à l'utilisateur le moment optimal pour verser les aliments. Puis, les moyens de chauffe 32 poursuivent le chauffage pendant un temps défini au bout duquel l'élément de cuisson 30 est maintenu en température jusqu'à ce que l'utilisateur déplace de nouveau l'organe de commande 24.

Pour des opérations de maintenance, le sous-ensemble électrique 90 peut être retiré du boîtier 4 en ôtant les vis de fixation 22.

Le support 20 du sous-ensemble électrique 90 simplement monté dans le boîtier 4 par le passage 13 prévu pour la mise en place de l'élément de cuisson 30 permet de simplifier notablement la construction du boîtier 4.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Il est notamment envisageable de concevoir un sous-ensemble électrique sur lequel sont montés préalablement des composants électroniques.

A titre de variante, le support 20 peut comporter une partie s'introduisant dans une ouverture d'une paroi extérieure du boîtier 4, ladite partie du support 20 formant alors une portion de l'enveloppe extérieure de l'appareil.

A titre de variante, le câble d'alimentation extérieure 74 peut être fixé au support 20. Le support 20 est alors dépourvu de prise de connexion extérieure 72. Le câble d'alimentation extérieure 74 est alors avantageusement issu de la partie précitée du support 20 formant une portion de l'enveloppe extérieure de l'appareil. En alternative, l'ouverture du boîtier 4 par laquelle passe le câble d'alimentation extérieure 74 peut notamment être obturée par une pièce rapportée.

A titre de variante, l'appareil électrique de cuisson 1 peut comprendre des moyens de régulation thermostatique 50 et/ou des moyens de sécurité thermique 54. Les moyens de régulation thermostatique 50 et/ou les moyens de sécurité thermique 54 comportent alors avantageusement au moins un palpeur 52, 56 prévu pour coopérer avec l'élément de cuisson 30.

A titre de variante, un organe de commande 24 et/ou un organe d'avertissement 46 solidaires du support 20 peuvent être disposés du côté de la face frontale 80 du boîtier 4.

A titre de variante, la prise de connexion extérieure 72 pourrait être remplacée par un câble d'alimentation électrique monté sur le support 20.

A titre de variante, le support 20 pourrait notamment présenter une face latérale portant la prise de connexion extérieure 72 et/ou un câble d'alimentation électrique, cette face latérale étant engagée dans une échancrure du boîtier 4.

## Revendications

1. Appareil électrique de cuisson (1), notamment une friteuse électrique, comprenant un boîtier (4), un élément de cuisson (30) comportant des moyens de chauffe (32) munis de connecteurs électriques (34), un support (20), des moyens de connexion électrique (40) prévus pour coopérer avec les connecteurs électriques (34), ainsi que des moyens de régulation thermostatique (50) et/ou des moyens de sécurité thermique (54), les moyens de connexion électriques (40) étant montés sur le support (20), les moyens de régulation thermostatique (50) et/ou les moyens de sécurité thermique (54) étant montés sur le support (20), **caractérisé en ce que** le support (20) est fixé sur une paroi interne (9) du boîtier (4), le support (20) définissant avec le boîtier (4) un espace de réception (23) logeant les parties électriques actives des moyens de régulation thermostatique (50) et/ou des moyens de sécurité thermique (54), le boîtier (4) formant un logement ouvert (2) ménageant un passage (13) permettant la mise en place du support (20) puis la mise en place de l'élément de cuisson (30), les connecteurs électriques (34) venant alors en contact avec les moyens de connexion électriques (40).

2. Appareil électrique de cuisson (1) selon la revendication 1, **caractérisé en ce que** le support (20) présente une face intérieure (21) concave.

3. Appareil électrique de cuisson (1) selon l'une des revendications 1 ou 2, **caractérisé en ce que** le support (20) est fixé sur une face supérieure (8) du boîtier (4).

4. Appareil électrique de cuisson (1) selon l'une des revendication, 1 à 3, **caractérisé en ce que** le support (20) est réalisé en matière plastique résistant à une température supérieure à 100°C.

5. Appareil électrique de cuisson (1) selon l'une des revendications 1 à 4, **caractérisé en ce que** le boîtier (4) présente une conformation (14) prévue pour coopérer avec le support (20).

6. Appareil électrique de cuisson (1) selon l'une des revendications 1 à 5, **caractérisé en ce que** le boîtier (4) comporte une coque (5) formée d'une seule pièce.

7. Appareil électrique de cuisson (1) selon l'une des revendications 1 à 6, **caractérisé en ce que** les moyens de régulation thermostatique (50) et/ou les moyens de sécurité thermique (54) comportent au moins un palpeur (52 : 56) prévu pour coopérer avec l'élément de cuisson (30).

8. Appareil électrique de cuisson (1) selon la revendication 7, **caractérisé en ce que** ledit palpeur (52 ; 56) coopère avec une face inférieure (31) de l'élément de cuisson (30).

9. Appareil électrique de cuisson (1) selon l'une des revendications 1 à 8, **caractérisé en ce que** des moyens de commande thermostatique (58) coopérant avec les moyens de régulation thermostatique (50) sont reliés à l'organe de commande (24).

10. Appareil électrique de cuisson (1) selon la revendication 9, **caractérisé en ce que** les moyens de commande thermostatique (58) actionnent un rupteur (70) ouvrant et fermant un circuit d'alimentation électrique.

11. Appareil électrique de cuisson (1) selon l'une des revendications 1 à 10, **caractérisé en ce que** le support (20) porte une prise de connexion extérieure (72).

12. Appareil électrique de cuisson (1) selon la revendication 11, **caractérisé en ce qu'**un organe de commande (24) et/ou un organe d'avertissement (46) solidaires du support (20) sont disposés du côté d'une face frontale (80) du boîtier (4), et **en ce que** la prise de connexion extérieure (72) est orientée à l'opposé de la face frontale (80).

13. Appareil électrique de cuisson (1) selon l'une des revendications 11 ou 12, **caractérisé en ce que** le boîtier (4) comporte une ouverture (17) prévue pour l'accès à la prise de connexion extérieure (72).

14. Appareil électrique de cuisson (1) selon la revendication 13, **caractérisé en ce que** le boîtier (4) comporte une cavité (1 b) dans laquelle est ménagée l'ouverture (17).

15. Appareil électrique de cuisson (1) selon l'une des revendications 1 à 14, **caractérisé en ce que** l'élément de cuisson (30) est une cuve de cuisson.

16. Appareil électrique de cuisson (1) selon l'une des revendications 1 à 15, **caractérisé en ce que** l'élément de cuisson (30) repose sur le boîtier (4).

## Claims

1. An electric cooking appliance (1), in particular an electric deep fryer, comprising a housing (4), a cooking element (30) provided with heater means (32) equipped with electrical connectors (34), a support (20), electrical connection means (40) designed to co-operate with the electrical connectors (34), and thermostatic regulation means (50) and/or thermal safety means (54), the electrical connection means (40) being mounted on the support (20), the thermostatic regulation means (50) and/or the thermal safety means (54) being mounted on the support (20), said electric cooking appliance being **characterized in that** the support (20) is fastened to an inside wall (9) of the housing (4), the support (20) cooperating with the housing (4) to define a reception space (23) receiving the active electrical portions of the thermostatic regulation means (50) and/or of the thermal safety means (54), the housing (4) forming an open recess (2) forming a passage (13) making it possible to put the support (20) in place and then to put the cooking element (30) in place, the electrical connectors (34) then coming into contact with the electrical connection means (40).

2. An electric cooking appliance (1) according to claim 1, **characterized in that** the support (20) presents a concave inside face (21).

3. An electric cooking appliance (1) according to claim 1 or claim 2, **characterized in that** the support (20) is fastened to a top face (8) of the housing (4).

4. An electric cooking appliance (1) according to any one of claims 1 to 3, **characterized in that** the support (20) is made of a plastics material that withstands a temperature in excess of 100°C.

5. An electric cooking appliance (1) according to any one of claims 1 to 4, **characterized in that** the housing (4) presents a shaped portion (14) that is designed to co-operate with the support (20).

6. An electric cooking appliance (1) according to any one of claims 1 to 5, **characterized in that** the housing (4) comprises a shell (5) formed in one piece.

7. An electric cooking appliance (1) according to any one of claims 1 to 6, **characterized in that** the thermostatic regulation means (50) and/or the thermal safety means (54) include at least one feeler (52; 56) designed to co-operate with the cooking element (30).

8. An electric cooking appliance (1) according to claim 7, **characterized in that** said feeler (52; 56) co-operates with a bottom face (31) of the cooking element (30).

9. An electric cooking appliance (1) according to claim 1 to 8, **characterized in that** thermostatic control means (58) co-operate with the thermostatic regulation means (50) are connected to the control member (24).

10. An electric cooking appliance (1) according to claim 9, **characterized in that** the thermostatic control means (58) actuate a breaker (70) opening and closing an electrical power supply circuit.

11. An electric cooking appliance (1) according to any one of claims 1 to 10, **characterized in that** the support (20) carries an external connection outlet (72).

12. An electric cooking appliance (1) according to claim 11, **characterized in that** a control member (24) and/or a warning member (46) that is/are secured to the support (20) are disposed on a front face (80) of the housing (4), and **in that** the external connection outlet (72) faces in the opposite direction to the direction in which the front face (80) faces.

13. An electric cooking appliance (1) according to claim 11 or 12, **characterized in that** the housing (4) is provided with an opening (17) designed to give access to the external connection outlet (72).

14. An electric cooking appliance (1) according to claim 13, **characterized in that** the housing (4) is provided with a cavity (15) in which the opening (17) is provided.

15. An electric cooking appliance (1) according to any one of claims 1 to 14, **characterized in that** the cooking element (30) is a cooking vessel.

16. An electric cooking appliance (1) according to any one of claims 1 to 15, **characterized in that** the cooking element (30) rests on the housing (4).

## Patentansprüche

1. Elektrisches Kochgerät (1), insbesondere eine elektrische Fritteuse, mit einem Gehäuse (4), einem Kochelement (30) mit Heizmitteln (32), die mit elektrischen Anschlüssen (34) versehen sind, einem Träger (20), Mitteln zur elektrischen Verbindung (40), die dazu vorgesehen sind, mit den elektrischen Anschlüssen (34) zusammenzuwirken, sowie Mitteln zur thermostatischen Regelung (50) und/oder Mitteln zur thermischen Sicherheit (54), wobei die elektrischen Mitteln zur elektrischen Verbindung (40) am Träger (20) angebracht sind, die Mittel zur thermostatischen Regelung (50) und/oder Mittel zur thermischen Sicherheit (54) am Träger (20) angebracht sind, **dadurch gekennzeichnet, dass** der Träger (20) an einer Innenwand (9) des Gehäuses (4) befestigt sind, wobei der Träger (20) mit dem Gehäuse (4) einen Aufnahmeraum (23) definieren, in dem die aktiven elektrischen Teile der Mittel zur thermostatischen Regelung (50) und/oder Mittel zur thermischen Sicherheit (54) aufgenommen sind, wobei das Gehäuse (4) eine offene Aufnahme (2) bildet, die einen Durchgang (13) ausbildet, der das Einsetzen des Trägers (20) und anschließend das Einsetzen des Kochelements (30) ermöglicht, wobei die elektrischen Anschlüssen (34) dann mit den elektrischen Mitteln zur elektrischen Verbindung (40) in Kontakt gelangen.

2. Elektrisches Kochgerät (1) nach Anspruch 1, **dadurch gekennzeichnet, dass** der Träger (20) eine konkave Innenfläche (21) aufweist.

3. Elektrisches Kochgerät (1) nach einem der Ansprüche 1 oder 2, **dadurch gekennzeichnet, dass** der Träger (20) an einer oberen Fläche (8) des Gehäuses (4) befestigt ist.

4. Elektrisches Kochgerät (1) nach einem der Ansprüche 1 bis 3, **dadurch gekennzeichnet, dass** der Träger (20) aus Kunststoff besteht, der bei einer Temperatur über 100°C hitzebeständig.

5. Elektrisches Kochgerät (1) nach einem der Ansprüche 1 bis 4, **dadurch gekennzeichnet, dass** das Gehäuse (4) eine Anformung (14) aufweist, die zum Zusammenwirken mit dem Träger (20) vorgesehen ist.

6. Elektrisches Kochgerät (1) nach einem der Ansprüche 1 bis 5, **dadurch gekennzeichnet, dass** das Gehäuse (4) eine einstückig gebildete Schale (5) aufweist.

7. Elektrisches Kochgerät (1) nach einem der Ansprüche 1 bis 6, **dadurch gekennzeichnet, dass** die Mitteln zur thermostatischen Regelung (50) und/oder Mitteln zur thermischen Sicherheit (54) mindestens einen Fühler (52; 56) aufweisen, der dazu vorgesehen, mit dem Kochelement (30) zusammenzuwirken.

8. Elektrisches Kochgerät (1) nach Anspruch 7, **dadurch gekennzeichnet, dass** der Fühler (52 ; 56) mit einer Innenfläche (31) des Kochelements (30) zusammenwirkt.

9. Elektrisches Kochgerät (1) nach einem der Ansprüche 1 bis 8, **dadurch gekennzeichnet, dass** Mittel zur thermostatischen Steuerung (58), die mit den Mitteln zur thermostatischen Regelung (50) zusammenwirken, mit dem Steuerorgan (24) verbunden sind.

10. Elektrisches Kochgerät (1) nach Anspruch 9, **dadurch gekennzeichnet, dass** die Mittel zur thermostatischen Steuerung (58) einen Unterbrecher (70) betätigen, der einen elektrischen Speisestromkreis öffnet und schließt.

11. Elektrisches Kochgerät (1) nach einem der Ansprüche 1 bis 10, **dadurch gekennzeichnet, dass** der Träger (20) eine Außensteckdose (72) trägt.

12. Elektrisches Kochgerät (1) nach Anspruch 11, **dadurch gekennzeichnet, dass** ein Steuerorgan (24) und/oder ein Warnorgan (46), die mit dem Träger fest verbunden sind, auf der Seite einer Stirnfläche (80) des Gehäuses (4) angeordnet sind, und dass die Außensteckdose (72) entgegengesetzt zur Stirnfläche (80) ausgerichtet ist.

13. Elektrisches Kochgerät (1) nach einem der Ansprüche 11 oder 12, **dadurch gekennzeichnet, dass** das Gehäuse (4) eine Öffnung (17) aufweist, die für den Zugang zur Außensteckdose (72) vorgesehen ist.

14. Elektrisches Kochgerät (1) nach Anspruch 13, **dadurch gekennzeichnet, dass** das Gehäuse (4) einen Hohlraum (15) aufweist, in welchem die Öffnung (17) ausgebildet ist.

15. Elektrisches Kochgerät (1) nach einem der Ansprüche 1 bis 14, **dadurch gekennzeichnet, dass** das Kochelement (30) eine Kochwanne ist.

16. Elektrisches Kochgerät (1) nach einem der Ansprüche 1 bis 15, **dadurch gekennzeichnet, dass** das Kochelement (30) auf dem Gehäuse (4) anliegt.
